# EUROPEAN PATENT APPLICATION

(11) **EP 0 945 321 A1**
(43) Date of publication of application: **29.09.1999**
(21) Application number: 98302289.8
(22) Date of filing: 25.03.1998
(51) Int. Cl.: B60T 8/88

(54) **A control unit, especially but not exclusively for controlling the brake pressure of a vehicle braking system, and a process for its operation**

(71) Applicant: Assembly Technology & Test Limited, London EC3A 7NJ (GB)
(72) Inventor: Mosen, Walter, Andernach (DE)
(74) Representative: Crouch, David John

(57) **Abstract**

A control unit, especially but not exclusively for controlling the brake pressure of a vehicle braking system, comprises an electronic control unit (ECU) for the controlled activation of at least one electrically activated component, for example a valve arrangement or an hydraulic pump which controls the flow of hydraulic fluid to and/or from at least one wheel brake unit (4). The electronic control unit (ECU) has a test program memory device (M), by means of which the or each electrically activated component can be brought into different operating conditions, whereby the test program can be performed in dependence upon a control signal fed into the electronic control unit.

The invention extends to a process in which such a test is performed.

## Description

The present invention relates to a control unit, especially but not exclusively for controlling the brake pressure of a vehicle braking system, comprising an electronic control unit for the controlled activation of at least one electrically activated component, for example a valve arrangement or an hydraulic pump which controls the flow of hydraulic fluid to and/or from at least one wheel braking unit.

Many similar locking protection (ABS) and /or traction-slip control (TC) braking pressure control units are built into vehicles. As a result these braking control units have to be capable of being tested for their functioning before assembly with the braking servo or the wheel braking devices. In any case the examination following final assembly is relatively expensive, since the ABS and/or ABS/TC operation of the braking pressure control units occurs in practice only in extreme driving situations.

Nevertheless the manufacturer needs to be able to test these functions of the braking pressure control units reliably. Workshops also have the problem, that a possible failure of a component of the braking pressure control unit (a valve arrangement, an hydraulic pump, a sensor, or a pipe) in the completely assembled, operational condition of the vehicle can only be identified with difficulty, because the relevant functions only operate in extreme dynamic driving situations.

The invention has therefore the aim of enabling examination of the braking system and/or its individual components for their functional integrity in a simple manner.

To address this aim the electronic control device according to the present invention has a test program memory device, by means of which the or each electrically activated component can be brought into different operating conditions, whereby the test program can be performed in dependence upon a control signal fed into the electronic control unit.

In this way the functional capability of components can be examined (both in electrical and mechanical aspects), which only normally become active in the vehicle in extreme operating circumstances. The invention permits an in-situ examination of the components of the vehicle braking system to a very much wider ranging extent, than has been possible previously.

One embodiment of the present invention renders it possible to examine an anti-lock braking system even when it is installed in a vehicle, for instance during workshop periods or regular inspections at TÜV or MOT test stations (government appointed agencies for carrying out periodic automobile safety inspections). An anti-lock braking system normally has a self monitoring function. However only the electrical connections, for instance the electro-magnetic valves, are examined in the self-monitoring function by an ohmic measurement process, but not the actual valve function, for example, that on activation the valve body is also in fact lifted from its valve seat. This problem is countered by the invention. The invention is seen to be especially advantageous in so-called integrated anti-lock braking systems, in which the electronic control unit forms one component unit with the hydraulic assembly and the electro-hydraulic system components no longer have any plug connections accessible from the outside.

In this case the test program can be permanently stored in the memory device, or the test program can be configured so as to be able to be written in, via an interface, into the memory device.

Preferably the electronic control unit should be able to control one or any of the valve arrangements by means of the test program. The latter may obtain the following operational conditions:
- pressure build-up in one or more wheel brakes;
- maintenance of pressure in one or more wheel brakes; and/or
- pressure release in one or more wheel brakes.

The test program may also be adapted to control an electronically controllable pump for the build-up of pressure.

Furthermore the present invention extends to a process for testing the functional integrity of a control unit as set out in any of the six preceding paragraphs, in which the initiation of a test program stored in the memory device of the electronic control unit for at least one electrically activated component, for example of an anti-lock braking control unit, by which the or each such component, for example the or each valve arrangement can be brought into various positions, whereby the test program is performed in dependence upon a control signal input to the electronic control unit.

The test program may comprise:
- pressure build-up in one or more wheel brake units;
- maintenance of pressure in one or more wheel brake units; and/or
- pressure release in one or more wheel brake units.

Preferably, by means of a test unit at least a physical value corresponding to vehicle deceleration is captured and displayed.

The deceleration of at least one wheel, and/or the braking movement listed in its data, and/or the braking movement listed in its data on at least one wheel of the vehicle, may thereby be captured and displayed.

Advantageously, a signal corresponding to vehicle deceleration is fed into the electronic control unit to control the running of the test program.

In one embodiment of the present invention, depending on the signal, parameters of the test program are changed, which determine, for individual wheel brake units, the frequency, the amplitude and/or the sequence of the stages
- pressure build-up in one or more wheel brake units;
- maintenance of pressure in one or more wheel brake units;
   and/or
- pressure release in one or more wheel brake units.

Preferably, an interface link is provided for a connection to a diagnostic equipment, from which the test program can be initiated or transferred into the electronic control unit. The connection can be established by a plug connection or by a wire-less connection.

Diagnostic equipment may be provided which has an identification code transmitter, which sends a code to the electronic control unit, so as to initiate the performance of the test program. As well as the code the diagnostic equipment can also include the test program, which is transmitted to the braking pressure control unit before the code.

The present invention also extends to a test program for a vehicle braking system with a braking pressure control unit for anti-lock protection of the wheel brake units, having the following stages:
1. capture of an electrical signal fed into the braking pressure control unit, whilst an activating force is introduced to a braking pressure transmitting unit, in order to generate a braking moment on at least one vehicle wheel, whereupon:
   1.1 a first electromagnetic valve is activated, so as to maintain the braking moment substantially constant;
   1.2 a second electromagnetic valve and an electric motor of a hydraulic fluid pump are activated, so to reduce the braking moment;
   1.3 the activation of the second electromagnetic valve is retracted, so as to keep the braking moment substantially constant;
   1.4 the activation of the first electromagnetic valve is retracted, so as to increase the braking moment M again, whereby the stages 1.1 - 1.4 are repeated for a predetermined number of times; and
   1.5 the activation of the electric motor 8 is retracted, so as to end the test program.

The present invention further extends to a test program for a vehicle braking system with a braking pressure control unit for anti-lock protection of the wheel brake units and for prevention of slip by the vehicle wheels, having the following stages:
1. capture of an electrical signal fed into the braking pressure control unit; whereupon:
   1.1 a change-over valve is activated, so as to connect an input side of a hydraulic pump with a reservoir of a braking pressure transmitting unit and to break the connection between the braking pressure transmitting unit and a wheel brake;
   1.2 an electric motor of the hydraulic pump is activated, so as to generate a braking moment at the vehicle wheel;
   1.3 a first electromagnetic valve is activated, so as to keep the braking moment substantially constant;
   1.4 a second electromagnetic valve is activated, so as to reduce the braking moment;
   1.5 the activation of the second electromagnetic valve is retracted, so as to maintain the braking moment substantially constant;
   1.6 the activation of the first electromagnetic valve is retracted, so as to increase the braking moment again, whereby the stages 1.1 to 1.6 are repeated for a predetermined number of times; and
   1.7 the activation of the change-over valve and the electric motor are retracted to end the program.

Yet another aspect of the present invention is directed to a machine-readable program and/or data carrier, with a program recorded on it as described above, and which is arranged for machine reading of the test program(s) by diagnostic equipment as described above.

Examples of units, systems and processes embodying the present invention will now be described with reference to the accompanying drawings, in which:
- Figure 1: shows a circuit diagram of an electronically controllable vehicle braking system in accordance with the invention in a first form of construction;
- Figure 2: shows a circuit diagram of an electronically controllable vehicle braking system in accordance with the invention in a second form of construction;
- Figure 3: shows a circuit diagram of an electronically controllable vehicle braking system in accordance with the invention in a third form of construction; and
- Figure 4: shows a number of graphs of different variables plotted against time, on a common time scale, in a process in accordance with the present invention.

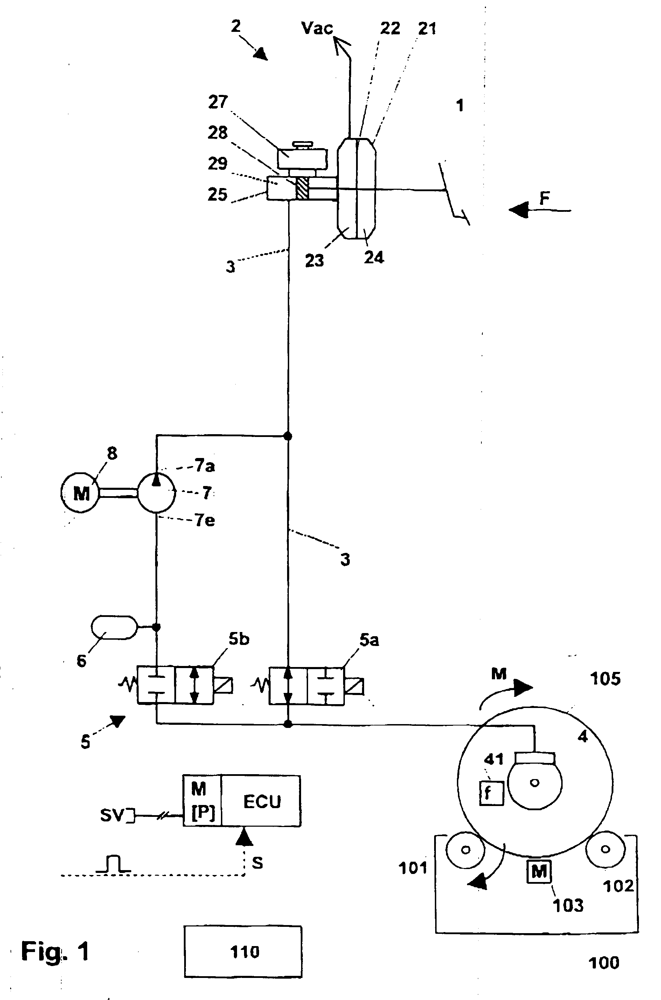

In Figure 1 an electronically controllable braking system for motor vehicles is shown. A brake pedal 1 is used to activate a braking pressure transmitting unit 2 via an actuating element. The braking pressure transmitting unit 2 has a brake cylinder 25, which together with a piston 28 within it forms a pressure chamber 29. The pressure chamber 29 is fed with brake fluid from a reservoir 27. A brake line 3 leads to a wheel brake 4 of the motor vehicle from the pressure chamber 29.

A valve arrangement is arranged in the brake line 3, between the braking pressure transmitting unit 2 and the wheel brake 4. The valve arrangement 5 comprises two electromagnetic valves 5a, 5b, which are in each case controlled by an electronic control unit ECU, so as to modulate the pressure in the wheel brake 4. To this end the electronic control unit ECU monitors the turning relationship of the vehicle wheel with which the wheel brake 4 is associated by means of a sensor 41, so as to regulate the pressure build-up, pressure release and pressure maintaining phases by controlling the electromagnetic valves 5a, 5b.

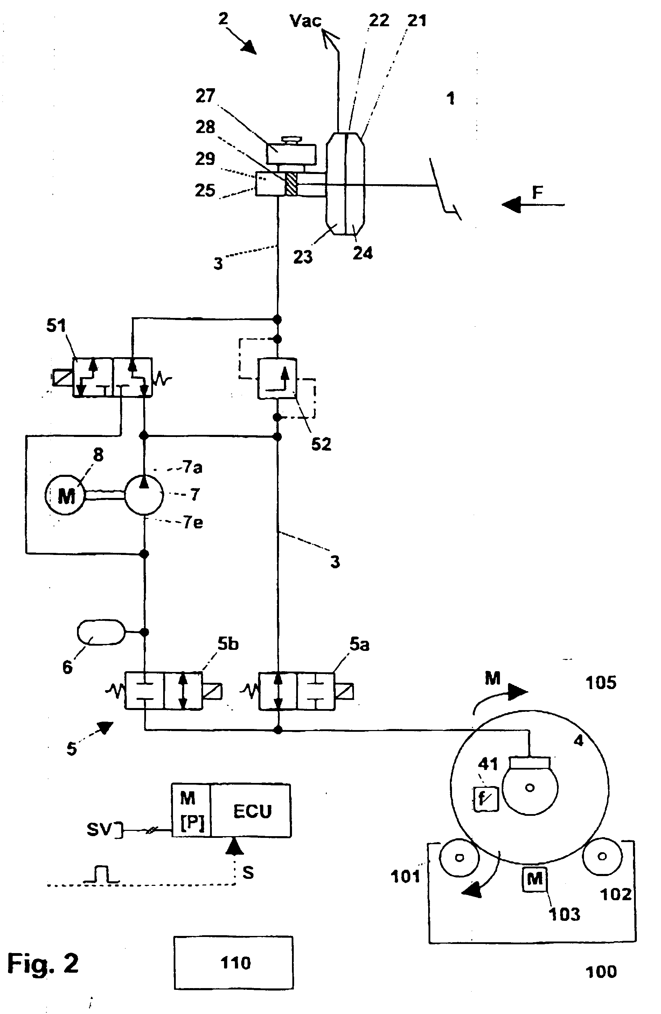

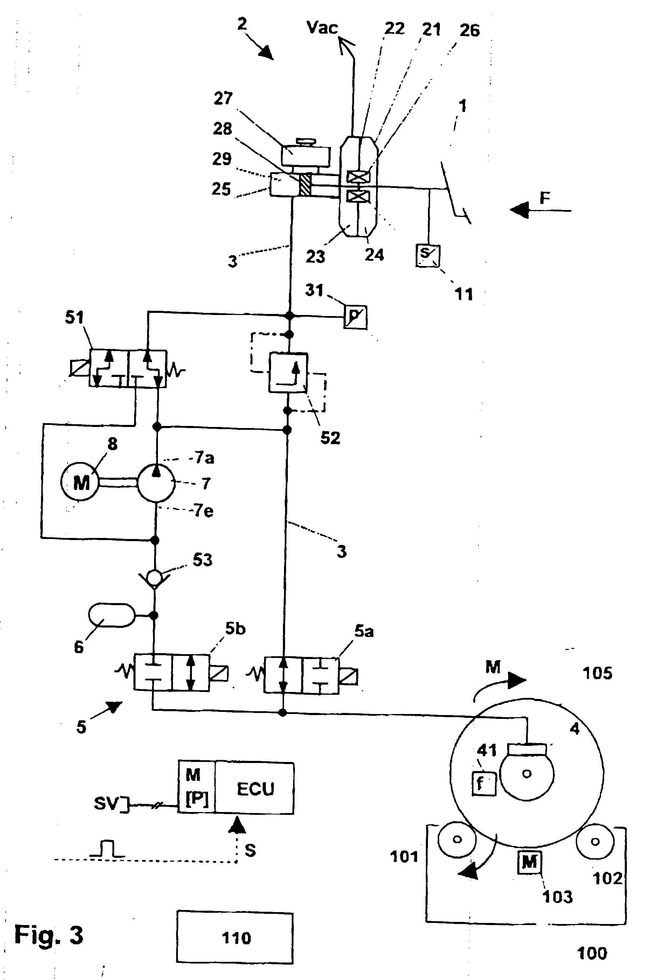

In the electrically non-operated condition the first electromagnetic valve 5a is in its open condition and the second electromagnetic valve 5b is in its closed condition, so as to be able to build up pressure in the wheel brake 4. When the first electromagnetic valve 5a is actuated, the first electromagnetic valve 5a goes into its closed condition and the second electromagnetic valve 5b remains in its closed condition, so that the pressure in the wheel brake 4 is kept constant. If both the first electromagnetic valve 5a and the second electromagnetic valve 5b are actuated, the first electromagnetic valve 5a goes into its closed condition and the second electromagnetic valve 5b into its open condition. In this case brake fluid from the wheel brake 4 can flow out via the second electromagnetic valve 5b into an intermediate store 6. The brake fluid present in the intermediate store 6 is transported back into the brake line 3 by an hydraulic pump 7. The hydraulic pump 7 is driven by an electric motor, which is similarly controlled by the electronic control unit ECU. The valve arrangement 5 can also be modified by having a mechanical quantity regulating valve instead of the first electromagnetic valve 5a, or by having an electromagnetically actuated three position two-way valve instead of the two electromagnetic valves 5a and 5b, or for a differently operating system, by having a two position three port valve, like the valve 51 shown in Figure 2 or Figure 3, (which could also be referred to as a three-port two-way valve), instead of the two electromagnetic valves 5a and 5b.

The braking pressure transmitting unit 2 has a pneumatic brake servo 21 to increase the power of the actuating force introduced by the brake pedal 1. A movable wall 22 divides the pneumatic brake servo 21 into a vacuum chamber 23 and a pressure chamber 24. For the generation of the vacuum the vacuum chamber 24 is connected to a vacuum source Vac. In a vehicle equipped with an engine with external ignition the vacuum created by the basic process in the induction pipe or in the input manifold is available as the vacuum source Vac. On the other hand in a vehicle with a diesel or electric motor an additional vacuum pump is required as the vacuum source.

When the brake pedal 1 is operated the brake servo 21 functions in a known manner such that the pressure chamber 24 is exposed to atmospheric pressure, so that a pressure difference operates on the movable wall 22, which supports the actuating force applied to the brake pedal 1. In the non-operated condition the vacuum chamber 23 and the pressure chamber 24 are connected together so that pressure equalises and no difference is effective on the movable wall 22.

In the electronically controlled braking system shown in Figure 2 a further change-over valve 51 is arranged in the brake line 3, which is controlled by the electronic control unit ECU. The change-over valve 51 is used to connect the braking pressure transmitting unit 2 either to the wheel brake 4 or the suction side 7e of the pump 7. To this end the change-over valve 51 is designed so that in the electrically non-operated condition the braking pressure transmitting unit 2 is connected to the wheel brake 4, and the connection to the suction side 7e of the pump 7 is closed. If the change-over valve 51 is electrically actuated, then the pressure transmitting unit 2 is connected to the suction side 7e of the pump 7, and the connection to the wheel brake 4 is closed. The form of construction of the change-over valve 51 shown in Figure 2 as a two-position three-port valve, or three-port two-way valve can in a known manner also be replaced by two two-position two-port valves, or two two-port two-way valves.

A pressure limiting valve 52 is connected in parallel to the change-over valve 51. The pressure limiting valve 52 sets up a connection from the wheel brake 4 or the output side 7a of the pump 7 to the braking pressure transmitting unit 2 if a predetermined pressure in the wheel brake 4 or on the output side 7a of the pump 7 is exceeded.

In the braking system shown in Figure 3 the brake servo 21 is electronically controlled via an electromagnet arrangement 26. By this arrangement, the braking moment M necessary for the examination of the braking system can be achieved from the test program by electric control of the electromagnet arrangement 26, so that an actuation of the brake pedal 1 is not necessarily required. Since the electromagnet arrangement 26 is bound up in the test process, its orderly function is similarly tested. An electronically controlled braking system according to Figure 3 is especially suited to the automation of the test sequence. For the purpose of automation it could for instance be provided that the whole test sequence could be controlled and reported from the evaluation unit 110, so that the electrical signal S from the evaluation unit 110 is given from the evaluation unit 110 to the electronic control unit ECU.

A non-return valve 53 is arranged between the intermediate store 6 and the suction side 7e of the pump 7, so that a current connection can be set up only in the direction of the intermediate store 6 to the suction side 7e of the pump 7.

Driving dynamics and/or traction-slip control, by which the stability of the motor vehicle is improved by automatic braking, especially in driving the vehicle along a curved path, requires a very rapid build-up of pressure in the wheel brake 4. Therefore on the onset of a regulating process:
- the pump 7 is started by actuation of the electric motor 8;
- the change-over valve 51 operates, to connect the braking pressure transmitting unit 2 with the suction side 7e of the pump 7, whereby the link from the braking pressure transmitting unit to the wheel brake 4 is closed; and
- the brake servo 21 is triggered independently of an actuation of the brake pedal 4.

As a result, a pre-filling of the pump 7 occurs via its suction side, whereby it is achieved that a sufficient pressure level is already available during the run up phase on the output side 7a of the pump 7. The pressure to be set up by the braking pressure transmitting unit 2 in the pressure chamber 29 of the braking pressure transmitting unit 2 owing to the triggering of the brake servo 21 hereby amounts to some 5 to 30 Bar, which amongst other things is dependent on the condition of the road surface. After the start-up phase of the pump 7, the activation of the brake servo 21 is entirely or partly retracted and the pressure modulation in the wheel brake 4 is effected by the activation of the valve arrangement 5. The activation of the change-over valve 51 is only released after the end of the regulating process.

In the event that the braking system is not electronically controlled (Figures 1 and 2), a stand-alone activating device, operating in accordance with the electrohydraulic, electropneumatic or electromechanical principle can be additionally provided, so as to automate the test sequence.

In all three forms of construction in Figures 1 to 3 the wheel brake 4 is allocated to a driving wheel 105. To evaluate the functional integrity and working of the braking system, a test stand 100 is provided, which measures the braking force at the periphery of the vehicle wheel 105, and thus the braking moment M, which is exercised on the vehicle wheel 105 on activation of the wheel brake 4. To accept the vehicle wheel 105 the test stand has two running rollers 101, 102, arranged parallel to each other. The first roller 101 is the so-called drive roller, which is driven by a drive unit, not described more closely, the second roller 102 is the so-called overrun roller. The drive unit, not shown in detail, drives the running rollers 101, 102 at a determined speed of rotation and keeps this constant even when the vehicle wheel 105 is braked by the activation of the wheel brake 4, so that the drive moment works against the braking moment M. The braking moment M is captured by a test device 103 and fed into an evaluation unit 110, which processes the information contained in the braking moment measurement further and indicates it in a clearly read form or lists it. Normally, the test stand comprises two running rollers 101, 102, independent of each other, for the right and left sides of the test stand, so that an independent examination of the wheels on a vehicle axle is possible. However, test stands are known, which facilitate the testing of all the wheels of a vehicle together.

In accordance with the invention, the electronic control unit ECU of the braking systems shown in Figures 1 to 3 is set up to carry out a test program. The test program is either permanently implemented in the memory of the microcomputer of the electronic control unit or can be loaded via an interface into the memory of the microcomputer of the electronic control unit. The activation of the test program is effected by an electrical signal S. The activation of the test program is for instance coupled with a diagnostic program, which is implemented in the memory of the microcomputer of the electronic control unit, and is protected by a security code and/or the use of special diagnostic equipment. In this way the diagnostic program is accessible only to authorised persons in the workshop or at the TÜV (MOT) test stations, so that any unintentional activation of the test program is for security reasons excluded. In order to be able to carry out the test program in a standardised manner on almost all vehicles with anti-locking braking systems, a standardised interface or standard adaptor is desirable for entering the electrical signal S into the electronic control unit.

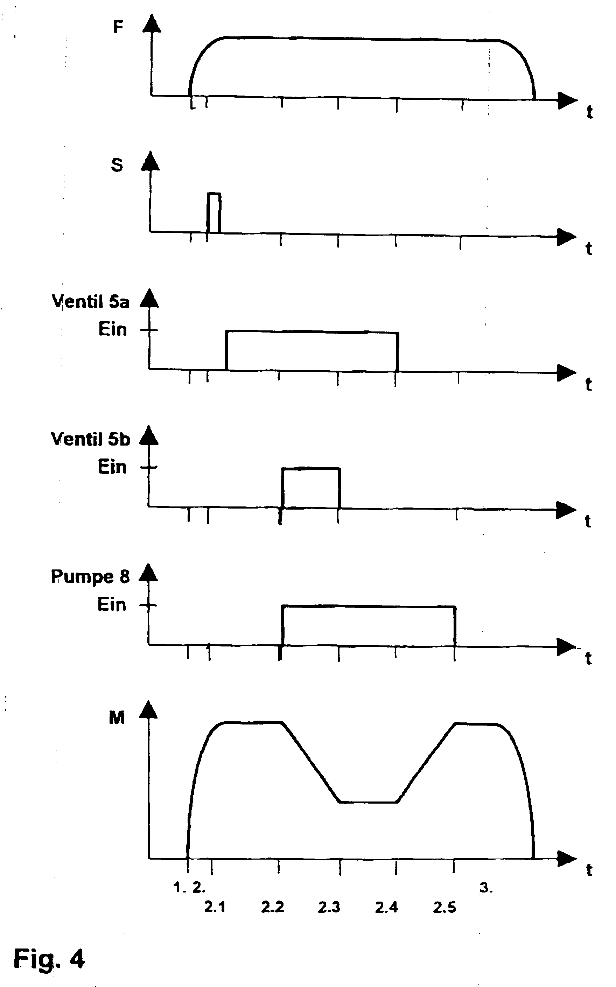

A process for testing the braking system shown in Figure 1 with a simple anti-locking system can run as follows in time sequence:
1. Firstly an activating force F is introduced to the braking pressure transmitting unit 2 via the brake pedal 1, so as to create a braking moment M on the vehicle wheel 105.
2. The test program is then activated by the electrical signal S, whereby:
   2.1 the first electromagnetic valve 5a is operated, so as to maintain the braking moment M constant;
   2.2 the second electromagnetic valve 5b and the electric motor 8 are activated, so as to reduce the braking moment M;
   2.3 the operation of the second electromagnetic valve 5b is retracted, so as to maintain the braking moment M constant;
   2.4 the operation of the first electromagnetic valve 5a is retracted, so as to increase the braking moment again; and
   2.5 the activation of the electric motor 8 is retracted, so as to end the test program.
3. The force input to the brake pedal 1 and thereby the operation of the braking power transmitting unit is retracted. This is shown in detail also in Figure 4.

The braking system shown in Figure 2 is extended beyond an anti-locking system to include anti slip control operation. The testing of the anti-locking system can firstly be conducted in the same way as for the braking system shown in Figure 1. It is also however possible to undertake a functional test of the braking system without activating the brake pedal 1, whereby in activating the change-over valve 51 the activation of the wheel brake 4 is effected by the pressure generated via the output side 7a of the pump 7. The time sequence of such a process can be as follows:
1. The test program is activated by the electrical signal S, whereby:
   1.1 the change-over valve 51 is activated, so as to connect the input side 7e of the pump 7 with the reservoir 27 of the braking pressure transmitting unit 2 and to break the link between the braking pressure transmitting unit 2 and the wheel brake 4;
   1.2 the electric motor 8 is activated, so as to generate a braking moment M on the vehicle wheel 105;
   1.3 the first electromagnetic valve 5a is operated, so as to maintain the braking moment M constant;
   1.4 the second electromagnetic valve 5b is operated, so as to reduce the braking moment M;
   1.5 the activation of the second electromagnetic valve 5b is retracted, so as to maintain the braking moment M constant;
   1.6 the activation of the first electromagnetic valve 5a is retracted, so as to increase the braking moment M again;
      and
   1.7 the activation of the change-over valve 51 and the electric motor 8 is retracted so as to end the test program.

So as also to include the function of the pressure limiting valve 52 in the examination of the braking system according to Figure 2, it can for instance be provided that with the electromagnetic valves 5a and 5b not activated, the braking moment M is increased so strongly that the braking pressure in the wheel brake 4 is sufficient to activate the pressure limiting valve 52, which again can be recognised by a reduction in the braking moment M.

In anti-lock braking systems the function is frequently provided, of varying the speed of rotation of the electric motor 8, so as to adjust the delivery volume of the pump 7. This function can also be tested in a simple manner, especially in a braking system which is extended for traction-slip control operation according to Figure 2. For this purpose the electric motor 8 can be driven at various speeds of rotation, to each of which is assigned a determined delivery volume from the pump 7, which, with the electromagnetic valves 5a and 5b not activated, cause different rise gradients of the braking moment M.

In accordance with the invention the examination of anti-lock braking systems is effected by evaluation of the characteristic of the braking moment M against time, which results from a predetermined time sequenced control by the test program of the electrohydraulic system components. Since the characteristic of the braking moment M against time reflects the characteristic of the braking pressure in the wheel brake 4 against time, conclusions can be immediately reached on the orderly functioning of the electrohydraulic system components, for instance regarding sealing, contamination or sticking. In this the examination requires, independent of any response resulting from the wheel speed relationship, that in normal operation the anti-locking control would be initiated. As a consequence the functional examination can even be performed at a low rotational speed of the running rollers 101, 102, which lies below the response threshold of the anti-locking system, which results in cost saving advantages. No locking of the vehicle wheel 105 and the running rollers 101, 102 is simulated, so that the tyre surface of the vehicle wheel 105 suffers no damage.

Furthermore an examination of the sensor installation 41, 31 and 11 can be performed. Thus, for example, examination of the revolution sensor 41 can be performed in this manner, that the vehicle wheel 105 is driven by the running rollers 101, 102 at predetermined speeds, the test program captures the associated measured value of the revolution sensor 41, and by operation of the electromagnetic valves 5a, 5b increases or reduces the braking moment M for a period, which is unambiguously related to the measured value from the revolution sensor 41, so that, from the characteristic of the braking moment M against time, the measured values and thus the orderly functioning of the revolution sensor 41 can be deduced. In the braking system according to Figure 3 which has a pressure sensor 31, the test program can for example set up a braking pressure depending on the measured value from the pressure sensor 31 via the electromagnet arrangement 26. Since the measured value from the pressure sensor 31 with the electromagnetic valves 5a, 5b not activated (and, if present, the change-over valve 51 not activated) corresponds directly to the braking pressure in the wheel brake 4, a test using the braking moment M resulting at the vehicle wheel 105 can hereby be effected.

The brake servo 21 is also electrically controllable via an electromagnet arrangement 26. The electromagnet arrangement 26 activates a control valve, not shown here in detail, so as to bring the braking force amplifier into different control settings (I., II., III.):
- into a first, so-called "build up setting" (I), in which the connection from the pressure chamber 23 to the vacuum chamber 24 is closed and the connection from the pressure chamber 24 to the atmosphere is open, so that a pressure difference is built up or increased on the movable wall 22, or
- into a second, so-called "maintaining position" (II.), in which the connection of the vacuum chamber 23 with the pressure chamber 24 and the connection of the pressure chamber 24 to the atmosphere are closed, so that an effective pressure difference is maintained at the movable wall 22, or
- into a third, so called "release position" (III.), in which the connection of the vacuum chamber 23 with the pressure chamber 24 is open and the connection from the pressure chamber 24 to the atmosphere is closed, so that by a process of pressure equalisation the effective pressure difference at the movable wall 22 is released.

The electrical controllability of the brake servo 21 also makes it possible to perform braking processes automatically, thus independently of any activation of the brake pedal 1. This serves for example to perform a traction-slip control or a travel dynamics control or a distance control. A sensor device 11 is provided, so as to capture values relating to the activation of the brake pedal 1 (preferably pedal position, but the values could also relate to, or instead relate to pedal travel, pedal force, and/or pedal activation speed) for the evaluation in the electronic control unit ECU, and also to perform braking in emergency situations, for instance by exceeding as a criterium a predetermined pedal activation speed. Instead of the sensor device 11 or in addition thereto, a pressure sensor 31 may be provided so as to be in communication with the pressure or the brake line 3. The sensor device 11 and/or the pressure sensor 31 is used to sense a braking operation.

Those skilled in the art will recognise that many variations and modifications to the illustrated embodiments are possible without taking the resulting construction or process outside the scope of the present invention. For example, there are many possible alternative forms of the valve arrangement 5. The latter is simply a common form of the valve arrangement used in anti-lock braking systems.

## Claims

1. A control unit, especially but not exclusively for controlling the brake pressure of a vehicle braking system, comprising an electronic control unit (ECU) for the controlled activation of at least one electrically activated component, for example a valve arrangement or an hydraulic pump which controls the flow of hydraulic fluid to and/or from at least one wheel brake unit (4), **characterised in that** the electronic control unit (ECU) has a test program memory device (M), by means of which the or each electrically activated component can be brought into different operating conditions, whereby the test program can be performed in dependence upon a control signal fed into the electronic control unit.

2. A control unit according to claim 1, **characterised in that** the test program (P) is permanently stored in the memory device (M).

3. A control unit according to claim 1, **characterised in that** the test program (P) can be written into the memory device (M) via an interface (5).

4. A control unit according to any preceding claim, **characterised in that** the control unit is a brake pressure control unit for a vehicle braking system, and **in that** the electronic control unit (ECU) controls at least one valve arrangement (5a, 5b, 51) by means of the test program (P).

5. A control unit according to claim 4, **characterised in that** the test program (P) can obtain the following the operational conditions:
- pressure build-up in one or more wheel brakes,
- maintenance of pressure in one or more wheel brakes
- release of pressure in one or more wheel brakes

6. A control unit according to any preceding claim, **characterised in that** an electronically controllable pump (7, 8) is provided to build up pressure, whereby the activation of the pump (7, 8) is effected under the control of the test program (P).

7. A process for testing the functional integrity of a control unit as claimed in any preceding claim, **characterised by:**
the initiation of a test program stored in the memory device (M) of the electronic control unit (ECU) for at least one electrically activated component, for example of an anti-lock braking control unit, by which the or each such component, for example the or each valve arrangement can be brought into various positions, whereby the test program is performed in dependence upon a control signal input to the electronic control unit (ECU).

8. A process for testing the functional integrity of a control unit, according to claim 7, **characterised in that** the test program comprises:
- pressure build-up in one or more wheel brake units,
- maintenance of pressure in one or more wheel brake units and/or
- pressure release in one or more wheel brake units.

9. A process, for testing the functional integrity of a control unit, according to claim 7 or claim 8, **characterised in that** by means of a test unit at least a physical value corresponding to vehicle deceleration is captured and displayed.

10. A process, for testing the functional integrity of a control unit, according to claim 9, **characterised in that** the deceleration of at least one wheel is captured and displayed.

11. A process, for testing the functional integrity of a control unit, according to claim 9 or claim 10, **characterised in that** the braking moment listed in its data on at least one wheel of the vehicle is captured and displayed.

12. A process, for testing the functional integrity of a control unit, according to claim 11, **characterised in that** the braking moment listed in its data on at least one wheel of the vehicle is captured and displayed by means of a brake testing stand.

13. A process, for testing the functional integrity of a control unit, according to one of claims 7 to 12, **characterised in that** a signal corresponding to vehicle deceleration is fed into the electronic control unit to control the running of the test program.

14. A process, for testing the functional integrity of a control unit, according to any one of claims 7 to 13, **characterised in that** depending on the signal, parameters of the test program are changed, which determine, for individual wheel brake units, the frequency, the amplitude and/or the sequence of the stages:
- pressure build-up in one or more wheel brake units;
- maintenance of pressure in one or more wheel brake units;
and/or
- pressure release in one or more wheel brake units.

15. A vehicle braking system with a control unit according to any preceding claim, **characterised by** an interface link (SV) for a connection to a diagnostic equipment, from which the test program can be initiated or transferred into the electronic control unit (ECU).

16. A vehicle braking system with a control unit according to any one of claims 1 to 14, or a vehicle braking system with a control unit according to claim 15, having diagnostic equipment which has an identification code transmitter, which sends a code to the electronic control unit (ECU), so as to initiate the performance of the test program.

17. A test program for a vehicle braking system with a braking pressure control unit for anti-lock protection of the wheel brake units, **characterised by** the following stages:
1. capture of an electrical signal fed into the braking pressure control unit, whilst an activating force is introduced to a braking pressure transmitting unit, in order to generate a braking moment on at least one vehicle wheel, whereupon:
1.1 a first electromagnetic valve is activated, so as to maintain the braking moment substantially constant,
1.2 a second electromagnetic valve and an electric motor of a hydraulic fluid pump are activated, so to reduce the braking moment,
1.3 the activation of the second electromagnetic valve is retracted, so as to keep the braking moment substantially constant,
1.4 the activation of the first electromagnetic valve is retracted, so as to increase the braking moment M again, whereby:
the stages 1.1 - 1.4 are repeated for a predetermined number of times,
and
1.5 the activation of the electric motor 8 is retracted, so as to end the test program.

18. A test program for a vehicle braking system with a braking pressure control unit for anti-lock protection of the wheel brake units and for prevention of slip by the vehicle wheels, **characterised by** the following stages:
1. capture of an electrical signal fed into the braking pressure control unit, whereupon:
1.1 a change-over valve is activated, so as to connect an input side of a hydraulic pump with a reservoir of a braking pressure transmitting unit and to break the connection between the braking pressure transmitting unit and a wheel brake,
1.2 an electric motor of the hydraulic pump is activated, so as to generate a braking moment at the vehicle wheel,
1.3 a first electromagnetic valve is activated, so as to keep the braking moment M substantially constant,
1.4 a second electromagnetic valve is activated, so as to reduce the braking moment,
1.5 the activation of the second electromagnetic valve is retracted, so as to maintain the braking moment substantially constant,
1.6 the activation of the first electromagnetic valve is retracted, so as to increase the braking moment again, whereby the stages 1.1 to 1.6 are repeated for a predetermined number of times, and
1.7 the activation of the change-over valve and the electric motor are retracted to end the program.

19. A machine-readable program- and or data carrier, **characterised by** a program recorded thereon according to claim 17 and/or claim 18, and arranged for machine reading of the test program(s) by diagnostic equipment as set out in claim 16.
